# EUROPÄISCHE PATENTANMELDUNG

(11) **EP 2 025 961 A1**
(43) Veröffentlichungstag der Anmeldung: **18.02.2009**
(21) Anmeldenummer: 08012206.2
(22) Anmeldetag: 07.07.2008
(51) Int. Cl.: F16D 13/75

(54) **Kupplungsaggregat**

(30) Priorität: 25.07.2007 DE 102007034617
(71) Anmelder: LuK Lamellen und Kupplungsbau Beteiligungs KG, 77815 Bühl (DE)
(72) Erfinder: Hoppe, Marcus, 77855 Achern (DE)

(57) **Zusammenfassung**

Die Erfindung betrifft ein Kupplungsaggregat (1) mit zumindest einer Reibungskupplung (2,3) bestehend aus einer mit einem Kupplungsgehäuse (12) drehfest verbindbaren Druckplatte (8) und einer drehfest und axial gegenüber der Druckplatte (8) verlagerbaren Anpressplatte (9,10) und einer bei einer axialen Verlagerung der Anpressplatte (9,10) mittels eines sich am Gehäuse abstützenden Hebels (13,14) zwischen der Druckplatte (8) und der Anpressplatte (9,10) verspannbaren Kupplungsscheibe (4,5), wobei axial zwischen Kupplungsgehäuse (12) und Anpressplatte (9,10) eine Verschleißeinrichtung vorgesehen ist, die ein mittels zumindest eines Energiespeichers unterstütztes Verdrehen von zueinander korrespondierenden Rampeneinrichtungen (20,24) in Umgangsrichtung ein verschleißbedingtes Axialspiel zwischen Kupplungsgehäuse (12) und Anpressplatte (9,10) ausgleicht. Die oder der zur Unterstützung der Verdrehbewegung der Rampeneinrichtung (20,24) vorgesehenen Energiespeicher sind senkrecht zur Verdrehachse der Rampeneinrichtung (20,24) gewickelte.

## Beschreibung

Die Erfindung betrifft ein Kupplungsaggregat nach dem Oberbegriff des Anspruchs 1.

Derartige Kupplungsaggregate mit einer Verschleißnachstelleinrichtung sind bekannt. Für eine Vielzahl von im Stand der Technik bekannten Dokumenten seien die DE 43 22 677 B4 und die DE 195 10 905 A1 herausgegriffen, die bereits verwendete Arten von Verschleißnachstellungen offenbaren. Beide Kupplungsaggregate weisen Rampeneinrichtungen zur Kompensation von Verschleiß auf, der beispielsweise durch Abrieb der Reibbeläge der Kupplungsscheibe, Setzen der Belagfederung und/oder Verformung von Metallteilen hervorgerufen wird. Durch einen Sensor, beispielsweise einen Kraft- oder Wegsensor, wird der Verschleiß, das heißt eine axiale Abnahme des Abstandes zwischen dem Kupplungsgehäuse und der Anpressplatte bei geschlossener Reibungskupplung, ermittelt und durch Verdrehen der Rampeneinrichtung, beispielsweise zwei korrespondierenden Rampenringen mit über den Ringumfang verteilten, einander gegensätzlich zugewandten Rampen, eine durch den Verschleiß hervorgerufene Schrägstellung der zwischen dem Kupplungsgehäuse und der Druckplatte verspannten Tellerfeder mit radial nach innen gerichteten Tellerfederzungen kompensiert. Die Nachstellung durch Verdrehen der Rampeneinrichtung erfolgt dabei federbelastet mittels in Umfangsrichtung wirksamer Druck- oder Zugfedern.

Ausgehend von diesem Stand der Technik ergibt sich die Aufgabe, Kupplungsaggregate funktionell zu verbessern, insbesondere die Langzeiteigenschaften dahingehend zu gestalten, dass über die Lebensdauer eine gleichbleibende Nachstellqualität erhalten bleibt. Ein weiterer Aspekt der Aufgabe ist die kostengünstige Herstellung von Verschleißnachstellungen, insbesondere von bezüglich gleichbleibender Nachstellqualität langzeitoptimierten Verschleißnachstellungen und den dazugehörigen Kupplungsaggregaten.

Die Aufgabe wird durch ein Kupplungsaggregat mit zumindest einer Reibungskupplung, bestehend aus einer mit einem Gehäusebauteil drehfest verbindbaren Druckplatte und einer drehfest und axial gegenüber der Druckplatte verlagerbaren Anpressplatte und einer bei einer axialen Verlagerung der Anpressplatte mittels eines sich am Gehäusebauteil abstützenden Hebels zwischen der Druckplatte und der Anpressplatte verspannbaren Kupplungsscheibe, wobei axial zwischen Gehäusebauteil und Anpressplatte eine Verschleißnachstelleinrichtung vorgesehen ist, die ein mittels zumindest eines Energiespeichers unterstütztes Verdrehen von zueinander korrespondierenden Rampeneinrichtungen in Umgangsrichtung ein verschleißbedingtes Axialspiel zwischen einem Gehäusebauteil und Anpressplatte ausgleicht, gelöst, wobei zur Unterstützung der Verdrehbewegung zumindest einer Rampeneinrichtung zumindest ein senkrecht zur Verdrehachse gewickelter Energiespeicher verwendet wird.

Als Kupplungsaggregat können dabei einfache Reibungskupplungen, beispielsweise als Anfahr- und Trennkupplung zwischen der Brennkraftmaschine und dem Getriebe eines Kraftfahrzeuges, oder Doppelkupplungen mit zwei integrierten Reibungskupplungen, beispielsweise für Doppelkupplungsgetriebe mit zwei mittels der Reibungskupplung mit einer Brennkraftmaschine koppelbaren Teilgetrieben oder einem Getriebeantrieb und einem Nebenabtrieb für Arbeitsgeräte, oder weitere vorteilhafte Ausgestaltungen mit weiteren Reibungskupplungen, beispielsweise für das Ankuppeln weiterer treibender oder getriebener Wellen von Funktionseinheiten wie Nebenabtrieben, Elektromaschinen und/oder zusätzlichen Getriebeeingangswellen. Dabei kann das Kupplungsaggregat Teil eines Drehmomentübertragungsaggregats sein, das zwischen Brennkraftmaschine und Ausgang des Kupplungsaggregats zumindest eine Dämpfungseinrichtung zum Dämpfen von Torsionsschwingungen, beispielsweise mittels eines Zweimassenschwungrades, und/oder von Axial- und/oder Taumelschwingungen, beispielsweise mittels einer axial elastischen Gestaltung von Bauteilen des Kupplungs- und/oder Drehmomentübertragungsaggregats. Es versteht sich, dass bei Verwendung einer Doppel-oder Mehrfachkupplung im Kupplungsaggregat eine, mehrere oder alle Reibungskupplungen mit der vorgeschlagenen Verschleißnachstelleinrichtung ausgestattet sein können.

Die Art der Reibungskupplung hängt dabei von der Anwendung ab. Es kann sich um sogenannte gedrückte oder gezogene Reibungskupplungen handeln, die zwangsweise geöffnet oder zwangsweise geschlossen sein können. Je nach Art der verwendeten Reibungskupplung kann die Nachstellung eines Verschleißes daher beispielsweise bei geöffneter, bei geschlossener oder im geöffneten oder geschlossenen Zustand mit Überweg beaufschlagter Reibungskupplung oder nach Speicherung des nachzustellenden Weges bei der nächsten Betätigung erfolgen. Allen Nachstellungen gemeinsam ist eine Rampeneinrichtung, die in Umfangsrichtung entgegen der gespeicherten Energie zumindest eines Energiespeichers gegenüber dem Kupplungsgehäuse beziehungsweise einem Gehäusebauteil, das mit der Kurbelwelle der Brennkraftmaschine und der Druckplatte rotiert, in der Weise verdreht wird, dass der zu kompensierende Weg durch die nach Verdrehung erhöhte Rampenhöhe am Kupplungsgehäuse oder einem mit diesem verbundenen Bauteil zur Anlage kommt. Die Rampen können beispielsweise in Form eines Rampenringes über den Umfang angeordnet sein, wobei ein hierzu korrespondierender Rampenring mit gegenläufigen Rampen am Kupplungsgehäuse vorgesehen oder mit diesem verbunden fest verbunden sein kann.

Der zur Betätigung der Reibungskupplung verwendete Hebel kann je nach Anforderung der Art der Reibungskupplung - zwangsweise offen oder geschlossen, gezogen oder gedrückt - ein einarmiger oder zweiarmiger Hebel sein, der radial außen beziehungsweise zwischen einer radial außen vorgesehenen Anlagefläche für die Anpressplatte und dem radial innen liegenden Endabschnitt die Anpressplatte beaufschlagt und bei axialer Bewegung der radialen Innenseite mit einem entsprechenden Hebelverhältnis die Druckplatte axial verlagert und damit die Reibungskupplung betätigt. Anstatt eines starren Hebels können beispielsweise scheibenförmige, radial innen segmentierte Bauteile, sogenannte Tellerfedern, verwendet werden, die über elastische Fähigkeiten in axiale Richtung verfügen.

Der zumindest eine Energiespeicher kann aus Drahtmaterial gewickelt sein. Vorzugsweise wird jedoch Bandmaterial aus elastischem Material, vorzugsweise Stahl verwendet. Auf diese Weise kann bei einer hohen Federkonstante die Wicklungslänge wie Länge des aufgewickelten Bandmaterials verwendet werden. Dies hat insbesondere den Vorteil, dass eine entsprechend ausgelegte Wicklungslänge einen großen Verdrehwinkel der Rampeneinrichtung zulässt. Ein auf diese Art verwendeter Energiespeicher in Form einer sogenannten Rollfeder kann durch Aufwickeln des gerollten Federpakets durch Ziehen oder Drücken eine Rampeneinrichtung verdrehen, wobei es vorteilhaft sein kann, wenn bei gedrückten Ausführung das bereits aufgewickelte Federband abgestützt wird und damit vor Biegen oder Knicken geschützt wird.

Ein vorteilhaftes Ausgestaltungsbeispiel eines Kupplungsaggregats sieht vor, dass der zumindest eine Energiespeicher radial außerhalb der zumindest einen Rampeneinrichtung angeordnet ist. Beispielsweise kann ein Energiespeicher, beispielsweise bestehend aus einer Rollfeder um die Rampeneinrichtung, also im Wesentlichen um die Verdrehachse der Rampeneinrichtung gewickelt sein, wobei dieser an einem Ende mit dem Kupplungsgehäuse und auf der anderen Seite unter Vorspannung mit dem Rampenring verbunden ist, indem er beispielsweise in eine Ausnehmung eingehängt wird. Werden mehrere, beispielsweise Rollfedern axial übereinander angeordnet, können diese über den Umfang verteilt an verschiedenen Stellen der Rampeneinrichtung befestigt und eine gleichmäßige Verdrehung durch gleichmäßigere Zug- oder Schubkräfte erzielt werden.

Besonders vorteilhaft kann ein Kupplungsaggregat sein, bei dem mehrere über den Umfang verteilte Energiespeicher, beispielsweise in Form von Rollfedern um außerhalb der Rampeneinrichtung über den Umgang verteilten, am Kupplungsgehäuse angeordneten Stiften gewickelt sind und an einer Rampeneinrichtung, beispielsweise einem Rampenring befestigt sind. Vorteilhaft kann ein Einhaken von umgelegtem Bandmaterial in Ausnehmungen des Rampenrings sein. Es versteht sich, dass die Befestigung oder Fixierung auch an einem mit dem Rampenring verbundenen Bauteil erfolgen kann. Bei einer besonders vorteilhaften Ausgestaltungsform kann die direkte Befestigung der Rollfeder am Stift unterbleiben, wenn beispielsweise die Länge des aufzurollenden Federbandes den aus dem maximalen Verdrehwinkel resultierende Verdrehweg kompensieren kann ohne aus dem Stift auszufädeln. Weiterhin kann der Stift oben verbreitert sein, um ein Ausfädeln des Federbandes zu verhindern.

Der Stift selbst kann in das Kupplungsgehäuse gesteckt, geschraubt, geschrumpft oder mit diesem verschweißt sein. Vorteilhaft kann eine einstückige Herstellung mit dem Kupplungsdeckel sein, indem der oder die über den Umfang verteilten Stifte mittels Materialumformungsverfahren aus dem Material des Kupplungsgehäuses gedrückt werden.

Das Kupplungsaggregat kann eine oder mehrere Verschleißnachstelleinrichtungen aus zwei Rampeneinrichtungen enthalten, wobei eine zur Sensierung des Verschleißweges und die andere zur Nachstellung des sensierten Verschleißweges vorgesehen ist und zumindest eine der beiden Rampeneinheiten zumindest einen senkrecht zur Verdrehachse gewickelten Energiespeicher aufweist. Es versteht sich, dass weitere Rampenringe oder anders ausgestattete Rampeneinrichtung unabhängig von ihrer Funktion in einer Verschleißnachstellung in vorteilhafter Weise von den vorgeschlagenen Energiespeichern in allen beschriebenen Formen verdreht werden können.

Die Erfindung wird anhand der Figuren 1 bis 4 näher erläutert. Dabei zeigen:
- Figur 1: ein Ausführungsbeispiel eines Kupplungsaggregats,
- Figur 2: eine Explosionszeichnung des in Figur 1 dargestellten Kupplungsaggregats,
- Figur 3: eine Ansicht eines Gehäusebauteils mit Verstelleinrichtung und
- Figur 4: ein Detail aus Figur 3.

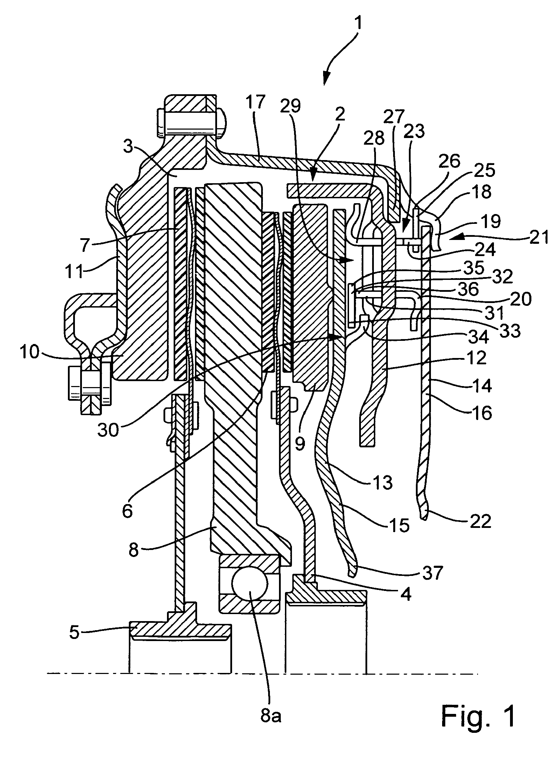

Das in Figur 1 dargestellte Kupplungsaggregat 1 umfasst zwei Reibungskupplungen 2, 3, die im ausgerückten, also geöffneten Zustand dargestellt sind.

Das Kupplungsaggregat bildet somit eine Doppelkupplung, die zwei Kupplungsscheiben 4, 5 umfasst, die mit unterschiedlichen Getriebeeingangswellen verbindbar sind, wobei das diese Wellen aufweisende Getriebe in vorteilhafter Weise ein so genanntes Lastschaltgetriebe bilden kann, welches zwei Teilgetriebe aufweisen kann,

Die Kupplungsscheiben 4, 5 tragen radial außen Reibbeläge 6, 7, die axial einspannbar sind zwischen einer den beiden Reibungskupplungen 2 und 3 gemeinsamen Druckplatte 8 und einer der jeweiligen Reibungskupplung 2 bzw. 3 zugeordneten Anpressplatte 9, 10. Die Druckplatte 8 bildet ein Bestandteil eines Schwungrades, das mit einer Brennkraftmaschine verbunden ist. Die Druckplatte 8 ist über axial verlaufende Bereiche, die hier nicht näher dargestellt sind, mit einer Antriebsplatte bzw. einem Antriebskorb 11 verbunden. Die Antriebsplatte 11 ist als Mitnehmerring ausgebildet. Die axial verlaufenden Bereiche, die eine Verbindung zwischen der Druckplatte 8 und der Antriebsplatte 11 herstellen, können entweder an der Druckplatte 8 oder an der Antriebsplatte 11 angeformt sein oder aber auch an beiden Teilen zumindest teilweise vorgesehen sein. Die Antriebsplatte 11 kann entweder nach Art eines Drehmomentwandlers mit einer zum Beispiel an der Kurbelwelle des Antriebsmotors vorgesehenen Antriebsplatte verschraubbar sein oder aber mit einem motorseitig angeordneten Antriebselement über eine axiale Steckverbindung verbindbar sein.

Die Druckplatte 8 ist über eine Lagerung 8a getriebeseitig gelagert und zumindest in einer Axialrichtung festgelegt, um die zumindest für eine der Reibungskupplungen erforderlichen Schließkräfte axial abzufangen. Die Druckplatte 8 kann also auf einer Getriebeeingangswelle gelagert bzw. axial abgestützt sein. Sie kann jedoch auch in Abwandlung dieser Lehre auf einem mit dem Getriebegehäuse fest verbundenen Abstützstutzen bzw. Abstützrohr aufgenommen und axial abgestützt sein.

Wie aus Figur 1 erkennbar ist, besitzen die Kupplungsscheiben 4 und 5 axial zwischen ihren beiden ringförmigen Reibbelägen 6 und 7 eine so genannte Belagfederung, die einen progressiven Aufbau und Abbau des von den Reibungskupplungen 2, 3 übertragbaren Drehmomentes über zumindest einen Teilbereich des Betätigungsweges gewährleisten.

Die Anpressplatte 9 ist mittelbar oder unmittelbar vorzugsweise über blattfederartige Elemente mit der Druckplatte 8 drehfest, jedoch begrenzt axial verlagerbar verbunden. Die Anpressplatte 10 der Reibungskupplung 3 ist in ähnlicher Weise mit der Druckplatte 8 antriebsmäßig gekoppelt. An der Gegendruckscheibe 8 ist ein Gehäusebauteil 12 befestigt, das hier als Blechdeckel ausgebildet ist. Axial beidseits dieses Bauteiles 12 sind in ringförmiger Anordnung vorgesehene Hebelelemente 13, 14 vorgesehen, mittels derer die jeweils zugeordnete Reibungskupplung 2, 3 betätigbar ist.

Die Hebelelemente 13, 14 können jeweils ein ringartiges Bauteil bilden, das tellerfederähnliche Eigenschaften aufweist, also federnd in seiner Konizität veränderbar ist. Im Folgenden werden die zu einem ringartigen Bauteil zusammengefassten Hebelelemente 13, 14 als Hebelfeder 15 bzw. 16 bezeichnet. Diese Hebelfedern 15, 16 besitzen vorzugsweise jeweils eine Federeigenschaft, die gewährleistet, dass sich diese tendenzmäßig in eine kegelstumpfförmige Position aufstellen, die einem geöffneten Zustand der Reibungskupplungen 2 und 3 entspricht.

Die Anpressplatte 10 trägt Zugmittel 17, die sich axial erstrecken und an ihrem der Anpressplatte 10 abgewandten Ende 18 eine Schwenklagerung bzw. Anlagefläche 19 tragen, an der die Hebelfeder 16 kippbar bzw. verschwenkbar abgestützt ist. Bei dem dargestellten Ausführungsbeispiel ist die Anlagefläche 19 einstückig mit den Zugmitteln 17 ausgebildet und durch einen radial nach innen hin gerichteten ringförmigen Bereich gebildet.

Die Zugmittel 17 können durch einzelne über den Umfang verteilte hakenartige Bauteile gebildet sein. In vorteilhafter Weise können diese Zugmittel 17 jedoch auch zu einem vorzugsweise aus Blech hergestellten Bauteil zusammengefasst werden, welches einen vorzugsweise geschlossenen ringförmigen Bereich besitzt, von dem aus mehrere axiale Schenkel ausgehen können, die mit der Anpressplatte 10 fest verbunden sind.

Radial innerhalb der Anlagefläche 19 ist die Hebelfeder 16 an einer Rampeneinrichtung in Form eines ringförmigen Rampenrings 20 abgestützt. Der ringförmige Rampenring 20 ist axial zwischen dem Gehäusebauteil 12 und der Hebelfeder 16 eingespannt und bildet ein Bestandteil einer Verschleißnachstelleinrichtung 21, mittels der zumindest der an den Reibbelägen 7 auftretende Verschleiß wenigstens teilweise automatisch ausgeglichen werden kann. Zum Schließen der Reibungskupplung 3 werden die radial inneren Spitzen 22 der Hebelfeder 16 in Richtung nach links beaufschlagt. Hierfür ist ein die Schließkraft zumindest im Wesentlichen in die Reibungskupplung 3 einleitendes Betätigungselement, wie zum Beispiel ein Betätigungslager vorgesehen, welches nicht näher dargestellt ist. Ein derartiges Betätigungselement bildet einen Bestandteil eines Betätigungssystems, welches als pneumatisches, hydraulisches, elektrisches oder mechanisch betätigtes Betätigungssystem ausgebildet sein kann oder aber eine Kombination der erwähnten Betätigungsmöglichkeiten aufweist, also beispielsweise als elektrohydraulisches Betätigungssystem ausgebildet ist.

Die die Drehmomentübertragung und die axiale Verlagerbarkeit der Anpressplatte 10 gewährleistenden Federmittel, wie insbesondere Blattfedern, die in an sich bekannter Weise die Bauteile 8 und 10 miteinander verbinden, besitzen vorzugsweise eine definierte axiale Vorspannung, die gewährleistet, dass die Anpressplatte 10 in Öffnungsrichtung der Reibungskupplung 3 beaufschlagt wird. Dies bedeutet, dass bei dem dargestellten Ausführungsbeispiel die Anpressplatte 10 axial in Richtung nach links von der Druckplatte 8 durch die erwähnten vorgespannten Blattfedern weggedrängt wird. Dadurch werden die Reibbeläge 7 freigegeben. Die Vorspannung der entsprechenden Federmittel, wie insbesondere Blattfedern, soll weiterhin gewährleisten, dass die Anlagefläche 19 stets axial in Richtung der radial äußeren Bereiche der Hebelfeder 16 gedrängt wird.

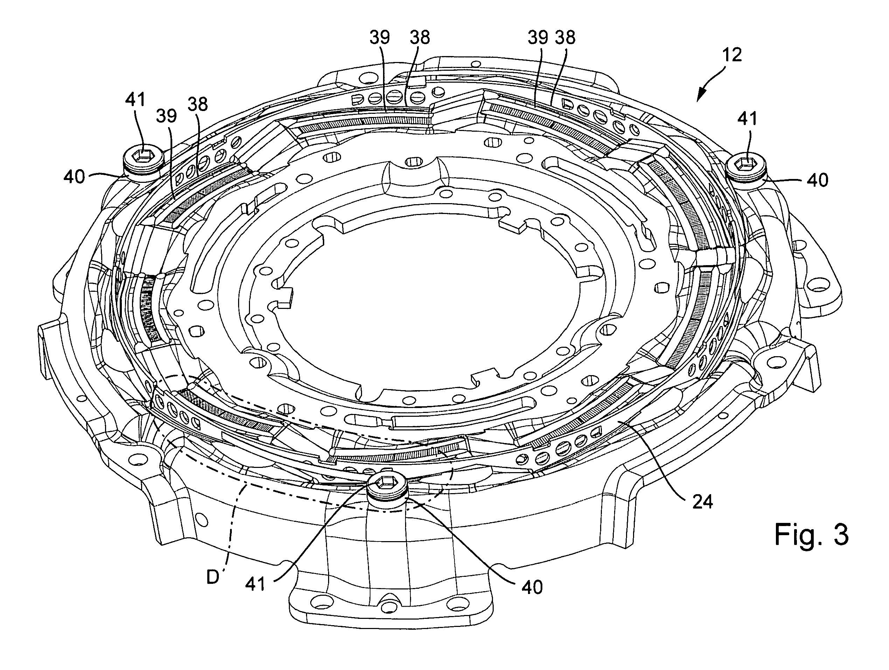

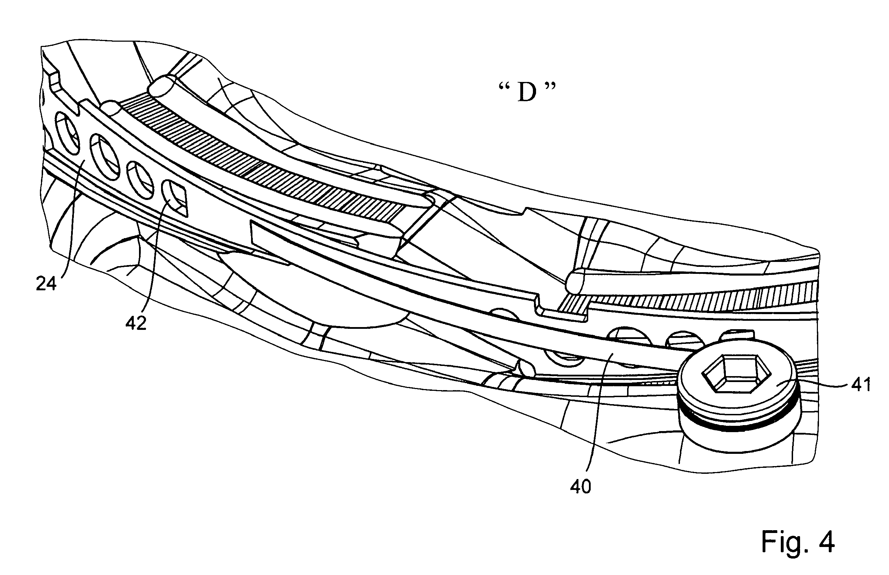

Der Rampenring 20 bildet einen so genannten Verstellring, der über die Rampeneinrichtung am Gehäusebauteil 12 axial abgestützt ist. Die Rampeneinrichtung besitzt in Umfangsrichtung verlaufende, sich in axialer Richtung erhebende Rampen. In bekannter Weise können entsprechende Rampen unmittelbar an dem Rampenring 20 angeformt sein und die mit diesen zusammenwirkenden Gegenrampen in vorteilhafter Weise unmittelbar im Bereich des Gehäusebodens des Gehäusebauteil 12 eingebracht sein. In Umfangsrichtung wird der Rampenring 20 von wenigstens einer in den Figuren 3 und 4 näher dargestellten Feder 40 in Umfangsrichtung bzw. Nachstellrichtung beaufschlagt.

Die Verschleißnachstelleinrichtung 21 umfasst weiterhin eine Sensoreinrichtung 23, die einen ebenfalls als Rampenring 24 ausgebildeten Sensorring aufweist, der in ähnlicher Weise, wie dies in Zusammenhang mit dem Rampenring 20 beschrieben wurde, über eine Rampeneinrichtung am Gehäuseboden des Gehäusebauteils 12 abgestützt ist und in Nachstellrichtung durch eine Feder umfangsmäßig beaufschlagt wird. Der Rampenring 24 ist hier axial zwischen dem Gehäusebauteil 12 und den äußeren Bereichen der Hebelfeder 16 angeordnet, und zwar hier auf radialer Höhe der Anlagefläche 19.

Die Sensoreinrichtung 23 besitzt weiterhin ein Sensorelement 25, das vorzugsweise axial federnde Bereiche besitzt. Das Sensorelement 25 klemmt, sofern kein Verschleiß aufgetreten ist, den Rampenring 24 axial ein, so dass dieser dann unverdrehbar gehalten ist. Das Sensorelement 25 besitzt Anschlagbereiche 26, die mit vom Zugmittel getragenen Gegenanschlagbereichen 27 zusammenwirken können, und zwar insbesondere beim Auftreten von Verschleiß an den Reibbelägen 7. Die axiale Anordnung der Anschlagbereiche 26 und Gegenanschlagbereiche 27 sowie die zwischen diesen beim Betätigen der Reibungskupplung 3 auftretenden Axialwege sind derart aufeinander abgestimmt, dass bei einer Schließung der Reibungskupplung 3 und fehlendem Verschleiß maximal lediglich eine Berührung zwischen den Anschlagbereichen 26 und den Gegenanschlagbereichen 27 erfolgen kann. Sofern jedoch ein Verschleiß vorhanden ist, kommen die Anschlagbereiche 26 an den Gegenanschlagbereichen 27 zur Anlage bevor der vollständige Schließweg bzw. Einrückweg der Reibungskupplung 3 erreicht ist. Dadurch wird bewirkt, dass in Abhängigkeit des aufgetretenen Verschleißes eine axiale Verlagerung der Anschlagbereiche 26 gegenüber zumindest dem Rampenring 24 erfolgt. Diese axiale Verlagerung bewirkt, dass der Sensorring tendenzmäßig entlastet wird und somit sich verdrehen kann um einen Winkel, der abhängig ist von dem durch das Sensorelement 25 detektierten Verschleiß. Die dabei erfolgende axiale Verlagerung des Rampenrings 24 gegenüber dem Gehäusebauteil wird durch das zwischen dem Rampenring 24 und diesem Gehäusebauteil vorgesehene Rampeneinrichtung gewährleistet.

Beim Öffnen, also Ausrücken der Reibungskupplung 3, wird die Hebelfeder 16 in eine winkelmäßige Lage zurückgedrängt, bei der die Spitzen 22 der Hebelfeder 16 eine zumindest annähernd gleich bleibende bzw. konstante axiale Lage einnehmen. Aufgrund des mittels der Sensoreinrichtung 23 erfolgten Verschleißausgleiches, der hier eine entsprechende axiale Verlagerung der Anlagefläche 19 nach rechts bewirkt, wird der Abstützring bzw. Rampenring 20 beim Öffnen der Reibungskupplung 3 entlastet, so dass auch dieser dann eine Verdrehung erfährt, die aufgrund des zwischen dem Gehäusebauteil 12 und dem Verstellring 20 vorhandene Rampeneinrichtung eine entsprechende axiale Verlagerung des Verstellringes 20 bewirkt.

Das die Anschlagbereiche 26 aufweisende Sensorelement kann durch ein ringförmiges Bauteil gebildet sein, das über den Umfang betrachtet einzelne, vorzugsweise gleichmäßig verteilte Befestigungen mit dem Gehäusebauteil 12 aufweist. Die zwischen diesen Befestigungen vorhandenen Bereiche des ringförmigen Sensorelementes 25 tragen die Anschlagbereiche 26. Die in Umfangsrichtung zwischen den Befestigungen vorgesehenen Bereiche des Sensorelementes 25 sind in axialer Richtung elastisch bzw. federnd verformbar. Für manche Anwendungsfälle kann es zweckmäßig sein, wenn diese Bereiche auch einer Torsionsbeanspruchung ausgesetzt werden, die zumindest ein geringfügiges Verdrillen zumindest der seitlich der Anschlagbereiche 26 sich umfangsmäßig erstreckenden Bereiche mit geringerer radialer Breite bewirken.

Die Hebelfeder 15 der Reibungskupplung 2 ist gegenüber der Hebelfeder 16 axial auf der anderen Seite der radialen Bereiche des Gehäusebauteils 12 vorgesehen. Die Hebelfeder 16 stützt sich mit einem radial äußeren Bereich an einem Abstützring bzw. Rampenring 28 ab. Der als Verstellring vorgesehene Rampenring 28 ist in ähnlicher Weise wie dies in Zusammenhang mit dem Rampenring 20 beschrieben wurde, gegenüber dem Gehäusebauteil 12 verdrehbar und an diesem über eine Rampeneinrichtung axial abgestützt. Der Rampenring 28 bildet einen Bestandteil einer Verschleißnachstelleinrichtung 29, die zwischen den radialen Bereichen des Gehäusebauteils 12 und der Hebelfeder 15 wirksam ist. Zwischen der Anpressplatte 9 und der Druckplatte 8 und/oder dem Gehäusebauteil 12 sind Drehmomentübertragungsmittel vorgesehen, die vorzugsweise durch an sich bekannte Blattfedern gebildet sind, welche axial derart vorgespannt sind, dass die Anpressplatte 9 axial gegen die Hebelfeder 15 gedrückt wird. Die axiale Gesamtkraft, welche auf die Hebelfeder 15 in Richtung nach rechts einwirkt, ist dabei derart bemessen, dass während des Betriebes des Kupplungsaggregates 1 eine axiale Verlagerung bzw. Verschwenkung der Hebelfeder 16 aufgrund zumindest von Resonanzerscheinungen und/oder Axialschwingungen bzw. Taumelschwingungen von zumindest einzelnen Bauteilen des Kupplungsaggregates verhindert wird. Eventuell können zusätzlich zu den Blattfederelementen weitere Energiespeicher bzw. Federelemente vorgesehen werden, die auf die Anpressplatte 9 oder aber unmittelbar auf die Hebelfeder 15 einwirken.

Die Verschleißnachstelleinrichtung 29 umfasst weiterhin eine Sensoreinrichtung 30, die radial innerhalb und hier beabstandet von dem Rampenring 28 angeordnet ist. Die Sensoreinrichtung 30 umfasst einen Sensorring in Form des Rampenrings 31, der ähnlich wie der Rampenring 24 gegenüber dem Gehäusebauteil 12 verdrehbar und über eine Rampeneinrichtung abgestützt ist. Weiterhin besitzt die Sensoreinrichtung 30 ein Sensorelement 32, das entweder mittelbar oder unmittelbar vom Gehäusebauteil 12 getragen wird. Das Sensorelement 32 besitzt zumindest einen, vorzugsweise mehrere über den Umfang verteilte Anschlagbereiche 33, die mit Gegenanschlagbereichen 34 zumindest beim Auftreten von Verschleiß an den Reibbelägen 6 der Kupplungsscheibe 4 zusammenwirken. Die Gegenanschlagbereiche 34 können durch Elemente gebildet sein, die mit der Hebelfeder 15 verbunden sind. Besonders vorteilhaft ist es, wenn diese Gegenanschlagbereiche 34 durch einstückig mit der Hebelfeder 15 ausgebildete Zungen gebildet sind. Das Sensorelement 32 besitzt Bereiche 35, die mit axialer Vorspannung an Bereichen 36 des Sensorringes 31 zusammenwirken. Durch die axiale Vorspannung zumindest der Bereiche 35 wird der Sensorring 31 axial eingespannt, so dass eine Verdrehung desselben zumindest bei fehlendem Verschleiß an den Reibbelägen 6 vermieden wird. Dadurch wird eine unkontrollierte, nicht auf einen Verschleiß zurückzuführende Nachstellung der Verschleißnachstelleinrichtung 29 vermieden.

Das Sensorelement 32 kann ebenfalls durch ein ringförmiges Bauteil gebildet sein, das ähnlich ausgebildet mit dem Gehäusebauteil 12 verbunden und wirksam ist, wie dies in Zusammenhang mit dem Sensorelement 25 beschrieben wurde.

Der aus Figur 1 ersichtliche axiale Abstand zwischen den Anschlagbereichen 33 und den Gegenanschlagbereichen 34 ist derart bemessen, dass bei voll geschlossener Reibungskupplung 2 und fehlendem Verschleiß an den Reibbelägen 6 lediglich ein Touchieren bzw. leichte Anlage zwischen diesen Bereichen 33 und 34 erfolgt, wodurch gewährleistet ist, dass der Sensorring 31 gegen Rotation blockiert bleibt. Das Schließen der Reibungskupplung 2 erfolgt in ähnlicher Weise wie dies in Verbindung mit der Reibungskupplung 3 beschrieben wurde. Es wird mittels einer Betätigungseinrichtung eine Schließkraft im Bereich der Spitzen 37 der Hebelfeder 15 eingeleitet. Diese Schließkraft wird allmählich aufgebaut, und zwar so lange, bis die auf die Anpressplatte 9 ausgeübte Axialkraft ausreicht, um das vom Motor abgegebene Drehmoment über die Kupplungsscheibe 4 an das Getriebe weiterzuleiten. Die maximale Anpresskraft kann dabei zumindest einen konstanten Wert aufweisen. Es kann jedoch auch vorteilhaft sein, in Abhängigkeit des Betriebszustandes des Motors und des dabei abgegebenen Drehmomentes diese Schließkraft entsprechend anzupassen. Dies bedeutet, dass, wenn der Motor lediglich 50 % seines Nominaldrehmomentes abgibt, die Anpresskraft entsprechend reduziert werden kann.

Eine ähnliche Betätigung ist auch für die Reibungskupplung 3 möglich.

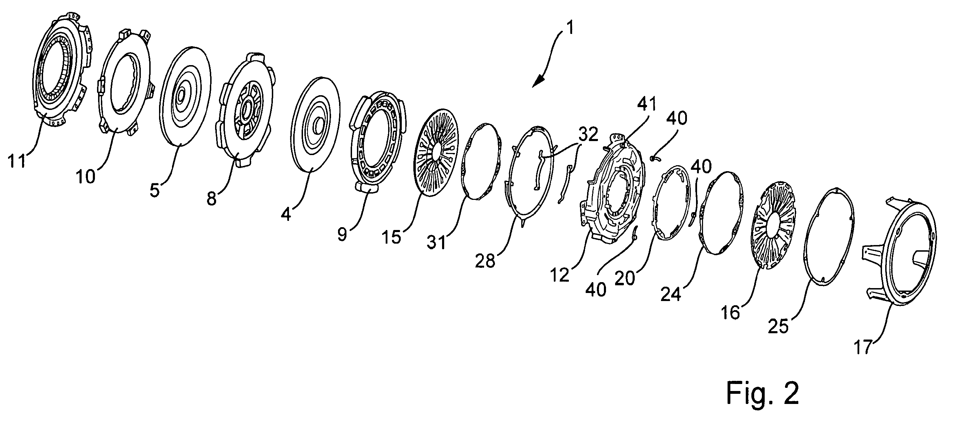

Aus der in Figur 2 dargestellten Explosionszeichnung des Kupplungsaggregates 1 sind die wesentlichen Ausgestaltungsmerkmale der Hauptbestandteile eines solchen Kupplungsaggregates zu entnehmen. Die entsprechenden Bauteile sind mit den Bezugszeichen der vorangegangenen Beschreibung versehen. Lediglich angedeutet sind die drei über den Umfang verteilten Rollfedern 40, die jeweils an einem am Gehäusebauteil 12 vorgesehen Stift 41 angebracht und in den Rampenring 24 eingehängt werden. Es versteht sich, dass sowohl der Rampenring 31 als auch die Rampenringe 20 und 28 zu deren Verdrehung von den vorgeschlagenen Rollfedern 40 unterstützt werden können.

Figur 3 und im Detail D die Figur 4 zeigen ein Gehäusebauteil 12 wie beispielsweise in Figur 1 verwendet. Es handelt sich dabei um ein flanschförmiges Bauteil, das mit der Druckplatte 8 (Figur 1) verbunden ist und daher der Funktion nach einem Kupplungsgehäuse zuzuordnen ist, da es axial fest und drehfest mit der Druckplatte und dem Eingangsteil des Kupplungsaggregats 1 verbunden ist und daher mit der Drehzahl der Kurbelwelle dreht. Allerdings wird die umhüllende Gestalt des Kupplungsaggregats 1 zusätzlich vom Antriebskorb 11 und den Zugmitteln 17 gebildet, so dass der Begriff Kupplungsgehäuse als umfassende Hülle für das Gehäusebauteil nicht zutrifft.

Die Ansicht des Gehäusebauteils 12 enthält der Übersicht halber lediglich einen mit über den Umfang verteilten Rampen 38 versehenen Ring, nämlich den Rampenring 24. Die Rampen 38 korrespondieren zu entsprechend im Gehäusebauteil 12 eingeprägten Rampen 39. Zur Sensierung eines Verschleißes wird der als Sensorring eingesetzte Rampenring 24 in Umfangsrichtung soweit verdreht, bis ein axiales Spiel zwischen dem Gehäusebauteil 12 und dem Hebelelement 16 (Figur 1) aufgebraucht ist. Um ein gezieltes Verdrehen im Verschleißfall sicher zu stellen, wird der Rampenring 24 durch über den Umfang verteilte Rollfedern 40 federbelastet. Im gezeigten Ausführungsbeispiel sind drei Rollfedern 40 über den Umfang verteilt außerhalb des Rampenringes 24 fest am Gehäusebauteil 12 aufgenommen. Die Aufnahme kann über in das Gehäusebauteil eingebrachte Stifte 41 erfolgen, die hier als Schrauben ausgestaltet in das Gehäusebauteil eingeschraubt werden. Dabei kann der Schraubenkopf gleichzeitig als Verliersicherung für die Rollfedern 40 dienen. Es versteht sich, dass die Stifte auch in anderer Weise in das Gehäusebauteil 12 eingebracht werden. Als besonders vorteilhaft hat es sich gezeigt, die Stifte als axial erhaben und warzen- oder hülsenförmig während des Materialgestaltungsprozesses des Gehäusebauteils 12 bereits vorzusehen, so dass die Rollfedern 40 daran befestigt und anschließend gegebenenfalls nur noch axial gesichert werden müssen.

Die Rollfedern 40 werden vorzugsweise aus Bandmaterial hergestellt und in den Rampenring 24 eingehängt. Hierzu ist die Rollfeder 40 an ihrem einen Ende entsprechend zu einem Haken geformt und der Rampenring 24 weist eine Öffnung 42 auf (Figur 4). Andere Formen der Befestigung, beispielsweise Vernieten, Punktschweißen und dergleichen können ebenfalls verwendet werden. Insbesondere wenn ein Aushängen der Rollfeder, beispielsweise bei Vibrationen, vermieden werden soll, kann eine Schnappverbindung zwischen Rollfeder 40 und dem Rampenring 24 vorgesehen werden.

Es kann auch eine zusätzlich auf die Rollfeder 40 aufgenietetes oder in die Rollfeder 40 eingehängtes, eingeclipstes oder in anderer Weise befestigtes Bauteil als Verbindungselement zum Rampenring 24 vorgesehen sein.

Die Montage der Rollfedern kann unter Vorspannung erfolgen. Es hat sich gezeigt, dass eine zusätzliche Fixierung der Rollfeder 40 am Stift 41 in den meisten Anwendungsfällen unterbleiben kann. Durch die immer enger werdenden Radien der Wicklungen verbleibt bei nahezu abgewickelter Rollfeder bei entsprechender Auslegung der Länge der Rollfeder immer noch zumindest eine Windung, die mit genügender Festigkeit die Rollfeder am Stift 41 hält.

Das in Figur 4 gezeigte Detail D der Figur 3 verdeutlicht die Positionierung und Befestigung der Rollfeder 40 mit einem Ende in einer Öffnung 42 am Rampenring 24 und mit dem anderen Ende am Stift 41.

In dem gezeigten Ausführungsbeispiel sind die Rollfedern 40 radial außerhalb des Rampenrings 40 angeordnet. Es versteht sich, dass bei entsprechender Führung des Federbandes einer Rollfeder entsprechende Rollfedern auch radial innerhalb eines zu verdrehenden Rampenringes angeordnet sein können, insbesondere wenn zwei oder mehrere Rampenringe radial beabstandet zueinander mit Rollfedern belastet werden sollen. In diesem Falle und in weiteren Ausgestaltungsbeispielen kann es vorteilhaft sein, Rollfedern mit einem Radius im Bereich des Radius des zu belastenden Rampenrings um die Verdrehachse des Rampenrings zu wickeln und den Rampenring quasi tangential mit der Federkraft der aufgewickelten Rollfeder zu belasten. Es versteht sich, dass derartige Ausgestaltungsbeispiele auch mit mehreren Rollfedern für einen Rampenring vorgesehen werden können, wenn diese beispielsweise axial bezogen auf die Verdrehachse übereinander angeordnet werden.

Die vorgeschlagenen Rollfedern können in vorteilhafter Weise so ausgestaltet werden, dass sie über den gesamten Verschleißbereich der Reibungskupplung, als über den gesamten Verdrehwinkel eines Rampenrings eine lineare Kennlinie aufweisen, so dass die Zug- oder Schubkraft einer derartig ausgelegten Rollfeder über den Verschleißbereich konstant ist. Derartige ausgelegte Rollfedern zeichnen sich daher gegenüber üblicherweise verwendeten Druck- und Zugfedern dadurch aus, dass unabhängig vom Verschleißzustand konstante Verdrehkräfte vorliegen. Bedingt durch Rollfedern mit einer derartigen Kennlinie kann die Reibungskupplung, beispielsweise das Sensorelement einfacher ausgelegt werden. In manchen Ausgestaltungsbeispielen kann es auch vorteilhaft sein, Rollfedern mit leicht ansteigender oder abfallender Kennlinie zu verwenden.

### Bezugszeichenliste

- 1: Kupplungsaggregat
- 2: Reibungskupplung
- 3: Reibungskupplung
- 4: Kupplungsscheibe
- 5: Kupplungsscheibe
- 6: Reibbelag
- 7: Reibbelag
- 8: Druckplatte
- 8a: Lagerung
- 9: Anpressplatte
- 10: Anpressplatte
- 11: Antriebskorb
- 12: Gehäusebauteil
- 13: Hebelelement
- 14: Hebelelement
- 15: Hebelfeder
- 16: Hebelfeder
- 17: Zugmittel
- 18: Abgewandtes Ende
- 19: Anlagefläche
- 20: Rampenring
- 21: Verschleißnachstelleinrichtung
- 22: Radial innere Spitzen
- 23: Sensoreinrichtung
- 24: Rampenring
- 25: Sensorelement
- 26: Anschlagbereich
- 27: Gegenanschlagbereich
- 28: Rampenring
- 29: Verschleißnachstelleinrichtung
- 30: Sensoreinrichtung
- 31: Rampenring
- 32: Sensorelement
- 33: Anschlagbereich
- 34: Gegenanschlagbereich
- 35: Bereich
- 36: Bereich
- 37: Spitze
- 38: Rampe
- 39: Gegenrampe
- 40: Rollfeder
- 41: Stift
- 42: Öffnung
- D: Detail

## Patentansprüche

1. Kupplungsaggregat (1) mit zumindest einer Reibungskupplung (2, 3) bestehend aus einer mit einem Gehäusebauteil (12) drehfest verbindbaren Druckplatte (8) und einer drehfest und axial gegenüber der Druckplatte (8) verlagerbaren Anpressplatte (9, 10) und einer bei einer axialen Verlagerung der Anpressplatte (9, 10) mittels eines sich am Gehäuse abstützenden Hebelelements (13, 14) zwischen der Druckplatte (8) und der Anpressplatte (9,10) verspannbaren Kupplungsscheibe (4, 5), wobei axial zwischen dem Gehäusebauteil (8) und der Anpressplatte (9, 10) eine Verschleißnachstelleinrichtung (21, 29) vorgesehen ist, bei der durch Verdrehen von zumindest eines Rampenrings (20, 24, 28, 31) in Umfangsrichtung ein verschleißbedingtes Axialspiel zwischen dem Gehäusebauteil (12) und der Anpressplatte (9, 10) sensiert und ausgeglichen wird, **dadurch gekennzeichnet, dass** zur Unterstützung der Verdrehbewegung zumindest eines Rampenrings (20, 24, 28, 31) zumindest eine senkrecht zur Verdrehachse gewickelte Rollfeder (40) verwendet wird.

2. Kupplungsaggregat (1) nach Anspruch 1, **dadurch gekennzeichnet, dass** zumindest eine Rampeneinrichtung durch einen über den Umfang verteilte Rampen aufweisenden Rampenring (20, 24, 28, 31) gebildet ist.

3. Kupplungsaggregat (1) nach Anspruch 1 oder 2, **dadurch gekennzeichnet, dass** die zumindest eine Rollfeder (40) aus Bandmaterial gewickelt ist.

4. Kupplungsaggregat nach einem der Ansprüche 1 bis 3, **dadurch gekennzeichnet, dass** die zumindest eine Rollfeder (40) radial außerhalb eines von ihm beaufschlagten Rampenrings 20, 24, 28, 31) angeordnet ist.

5. Kupplungsaggregat nach einem der Ansprüche 1 bis 4, **dadurch gekennzeichnet, dass** mehrere über den Umfang verteilte Rollfedern (40) an einem Ende mit dem Gehäusebauteil (12) und am anderen Ende mit dem Rampenring (20, 24, 28, 31) verbunden sind.

6. Kupplungsaggregat (1) nach Anspruch 5, **dadurch gekennzeichnet, dass** die Rollfedern (40) jeweils um einen sich axial aus dem Gehäusebauteil (12) erstreckenden Stift (41) gewickelt sind.

7. Kupplungsaggregat (1) nach Anspruch 6, **dadurch gekennzeichnet, dass** der Stift (41) mittels Metallumformungsverfahren aus dem Gehäusebauteil (12) gebildet ist.

8. Kupplungsaggregat (1) nach einem der Ansprüche 1 bis 3, **dadurch gekennzeichnet, dass** die zumindest eine Rollfeder um die Verdrehachse des zumindest einen Rampenrings gewickelt ist.

9. Kupplungsaggregat (1) nach einem der Ansprüche 1 bis 8, **dadurch gekennzeichnet, dass** mehrere Rollfedern axial übereinander zur Verdrehachse des Rampenrings angeordnet sind.

10. Kupplungsaggregat (1) nach einem der Ansprüche 1 bis 9, **dadurch gekennzeichnet, dass** die Verschleißnachstelleinrichtung (21, 29) aus zwei Rampenringen besteht, wobei einer zur Sensierung des Verschleißweges und der andere zur Nachstellung des sensierten Verschleißweges vorgesehen ist, **dadurch gekennzeichnet, dass** zumindest einer der beiden Rampenringe zumindest eine senkrecht zur Verdrehachse gewickelte Rollfeder aufweist.

11. Kupplungsaggregat (1) nach einem der Ansprüche 1 bis 10, **dadurch gekennzeichnet, dass** das Kupplungsaggregat (1) zwei eine Doppelkupplung für ein Doppelkupplungsgetriebe bildende Reibungskupplungen (2, 3) aufweist, wobei zumindest eine Reibungskupplung (2, 3) eine Verschleißnachstellungseinrichtung (21, 29) aufweist.
